# EUROPÄISCHE PATENTSCHRIFT

(11) **EP 0 899 252 B1**
(45) Veröffentlichungstag und Bekanntmachung des Hinweises auf die Patenterteilung: **04.06.2003**
(21) Anmeldenummer: 98115307.5
(22) Anmeldetag: 14.08.1998
(51) Int. Cl.: C04B 41/48, B23K 3/08

(54) **Verfahren zum Erhöhen der Festigkeit eines porösen Körpers**
Process for increasing the strength of a porous article
Procédé pour l'augmentation de la réstitance mécanique d'un corps poreux

(30) Priorität: 18.08.1997 PL 32165397
(43) Veröffentlichungstag der Anmeldung: 03.03.1999
(73) Patentinhaber: IBACH Steinkonservierung GmbH & Co. KG, 96120 Bischberg (DE)
(72) Erfinder: Ibach, Hermann Wolf, 96120 Bischberg (DE)
(74) Vertreter: Cohausz & Florack

(56) Entgegenhaltungen:
- EP-A- 0 251 166
- EP-A- 0 360 152
- EP-A- 0 709 524
- DE-A- 2 254 146
- US-A- 5 061 556
- PATENT ABSTRACTS OF JAPAN vol. 017, no. 286 (M-1422), 2. Juni 1993 & JP 05 016249 A (DAIWA SEIKO INC), 26. Januar 1993

## Beschreibung

Die Erfindung betrifft ein Verfahren zum Erhöhen der Festigkeit eines porösen Körpers und dessen Widerstandsfähigkeit gegen Verwitterung.

Um eine dauerhafte Widerstandsfähigkeit gegenüber Verwitterung pöröser Steinkörper zu gewährleisten, ist es in der Hauptsache erforderlich, das Eindringen von Wasser in den zu schützenden porösen Körper zu unterbinden. Dies geschieht beispielsweise gemäß der DE 22 54 146 durch vollständige Tränkung des porösen Körpers mit einem organischen Harz und anschließender Härtung des Harzes.

Die US 5 061 556 beschreibt einen Formkörper, der mit einem Bindemittel imprägniert ist. Das Bindemittel ist ein Copolymer, das aus 60 bis 95 Gew.% Methylmethacrylat, 5 bis 40 Gew.% Methacrylsäure, 0 bis 35 Gew.% eines oder mehrerer Acrylsäureester eines C₁-C₈-Alkanols, 0 bis 5 Gew.% eines copolymerisierbaren olefinisch mehrfach ungesättigtem Monomer und 0 bis 5 Gew.% eines weiteren copolymerisierbaren Monomers besteht. Das Copolymer weist eine Glasübergangstemperatur zwischen 60 und 125°C auf. Der Formkörper besteht hauptsächlich aus mineralischen Fasern, nicht faserigen mineralischen Füllstoffen und Stärke.

The Patent Abstract of JP-A-05016249 offenbart einen rohrförmigen Körper, der durch das Aufwickeln eines Prepregs erhalten wird. Das Prepreg besteht aus hochfesten Fasern, die mit einem wärmehärtbaren synthetischen Harz auf der Basis eines Epoxidharzes imprägniert sind. Das Harz weist eine Glasübergangstemperatur von 80 bis 110°C auf.

Die EP 709 524 A1 bezieht sich auf ein Verfahren zum Verstärken von Betondecken und schlägt dazu vor, ein durch wärmehärtbares Harz nach einer Oberflächenbehandlung auf die Oberfläche der Betondecke aufzubringen, in das Harz mit einer Glasübergangstemperatur von 60°c ein unter Spannung stehendes verstärkendes Fasermaterial einzubringen, wodurch das verstärkende Material mit der Betondecke verklebt wird. Das wärmehärtbare Harz ist ein Epoxidharz, ein ungesättigter Polyester oder ein Vinylester.

Bekannte Tränkflüssigkeiten sind lösungsmittelfreie Reaktionsharzsysteme, beispielsweise Acrylate, Polyester, Epoxyharze, Silicon-Kautschuke, die einen Härter enthalten.

Natürliche und künstliche Steine als poröse Körper unterliegen bei freier Bewitterung sehr starken Temperaturschwankungen mit entsprechenden Kontraktionen und Ausdehnungen der Steine. Bei Kälte entspricht die Temperatur des Steins weitestgehend der herrschenden Temperatur und kann deshalb durchaus -20°C und tiefer betragen. Bei direkter Sonneneinstrahlung können auf der der Sonne zugewandten Seite bis zu 60°C auftreten. Dadurch entstehen im Stein sehr hohe Temperaturunterschiede, die mit dem Aufbau von Spannungen verbunden sind.

Diese Temperaturschwankungen äußerten sich in der Vergangenheit auch negativ bei den zur Konservierung der Steine eingesetzten Harze; es tritt mit der Zeit eine Versprödung auf, so daß Wasser, insbesondere in Form von Luftfeuchtigkeit, wieder Zugang zu den Poren des Steins hat.

Der Erfindung liegt somit die Aufgabe zugrunde, ein Tränkmedium bereitzustellen, welches einerseits in die feinen Poren von Steinen eindringt und sich mit den Porenwandungen verbindet und andererseits keine Materialerleidung bei Temperaturschwankungen erfährt, so daß im Stein keine zusätzlichen Spannungen aufgebaut werden.

Diese Aufgabe wird gelöst durch eine Tränkflüssigkeit zur Erhöhung der Festigkeit von porösen natürlichen und künstlichen Steinen und deren Widerstandsfähigkeit gegen Verwitterung, wobei die Tränkflüssigkeit
- 65 bis 95 Gew.% einer oder mehrerer polymerisierbarer Säuren oder Säurederivate, ausgewählt aus Methacrylsäure, deren Salze und Ester, Fumarsäure, deren Salze und Ester, Itaconsäure, deren Salze und Ester, Salzen und Estern der Acrylsäure, Acrylnitril, Acrylamid sowie deren Gemischen
- 1 bis 20 Gew.% eines Weichmachers
- 1 bis 10 Gew.% eines Organosilans enthält und das daraus erhaltene Harz oder Harzgemisch eine Glasübergangstemperatur von 70 bis 90°C aufweist.

Unter Glasübergangstemperatur (Tg) wird im allgemeinen diejenige Temperatur verstanden, bei der ein amorpher Feststoff aus dem flüssigen in den Glaszustand übergeht oder umgekehrt. Im Sinne der vorliegenden Erfindung bezieht sich dieser Begriff nicht nur auf die Glasübergangstemperatur eines bestimmten Harzes, sondern auch auf die entsprechende Temperater von Harzgemischen. Es ist zu berücksichtigen, daß ein polymeres Material gegenüber seinem normalen Zustand bei der Glasumwandlungstemperatur beginnt, weicher zu werden, wobei gleichzeitig die thermische Dehnung des polymeren. Materials überproportional steigt. Außerdem wird bei jedem Durchschreiten der Glasübergangstemperatur die Qualität des polymeren Materials verschlechtert.

Die erfindungsgemäße Tränkflüssigkeit enthält 65 bis 95 Gew.%, berechnet auf den Gesamtfeststoffgehalt, an einer oder mehreren polymerisierbaren Säuren oder Säurederivaten. Geeignete Säuren oder Säurederivate sind Acrylsäure und deren Salze und Ester, Methacrylsäure und deren Salze und Ester, Maleinsäure und deren Salze und Ester, Fumarsäure und deren Salze und Ester, Itaconsäure und deren Salze und Ester, Acrylnitril und Acrylamid sowie deren Gemische. Zur Vernetzung der Polymeren ist ein üblicher Härter wie Butylperoxid erforderlich. Dieser wird in Mengen von 0,5 bis 2 Gew.% eingesetzt.

Die erfindungsgemäß einzustellende Glasübergangstemperatur wird durch den Zusatz von Weichmachern in ausreichender Menge erhalten. Die Menge des Weichmachers in der Tränkflüssigkeit kann 1 bis 20 Gew.% betragen. Erfindungsgemäß geeignete Weichmacher sind solche, die sich unkritisch mit den eingesetzten Tränkharzen verarbeiten lassen. Erfindungsgemäße Polymerweichmacher sind Weichmacher auf der Basis von Polyestern, beispielsweise Adipinsäurepolyestern, Polyethern, Polyglykolen und Nitrilkautschuk. Erfindungsgemäß besonders bevorzugte Polymerweichmacher sind Ethyltriglykolmethacrylat (ETMA) und 2-Ethylhexylacrylat (EHA).

Es hat sich ferner herausgestellt, daß es vorteilhaft ist, der Tränkflüssigkeit neben einem Weichmacher oder einer als Weichmacher wirkenden polymerisierbaren Säure zusätzlich Ethyltriglykolmethacrylat und/oder 2-Ethylhexylacrylat einzusetzten.

Gemäß einer bevorzugten Ausführungsform der vorliegenden Erfindung wird die Glasübergangstemperatur des Tränkharzes auf 78 bis 85°C eingestellt, in besonders bevorzugter Weise beträgt sie etwa 80°C.

Gemäß einer weiteren bevorzugten Ausführungsform der Erfindung enthält die Tränkflüssigkeit eine polymerisierbare Säure mit 1 bis 5 Kohlenstoffatomen. Beispiele besonders geeigneter polymerisierbarer Säuren sind Acrylsäure, Methacrylsäure, Maleinsäure, Fumarsäure, Itaconsäure.

Die Tränkflüssigkeit kann ferner weitere übliche Zusätze wie Haftvermittler in Mengen von 1 bis 10 Gew.% enthalten. Geeignete Haftvermittler sind Organosilane, wie Tetramethylsilan, Tetraphenylsilan, Hexamethyldisilan.

Die erfindungsgemäßen Tränkharzzusammensetzungen sind geeignet für die Behandlung natürlicher und künstlicher Steine, insbesondere für kalzitisch gebundene Sandsteine, Kalksteine und Marmore. Sie sind ferner auch gut zur Erhöhung der Widerstandsfähigkeit gegen Verwitterung von Beton geeignet.

Zur Tränkung wird der erfindungsgemäß zu behandelnde Stein gemäß einer bevorzugten Ausführungsform nach Trocknung in einen Behälter eingebracht, der unter Vakuum gesetzt wird. Das Vakuum beträgt 0,1 bis 0,3 bar. Hierdurch wird der Stein entgast. Anschließend wird unter Aufrechterhalten des Vakuums die erfindungsgemäße Tränkflüssigkeit in den Behälter eingebracht, so daß der Stein vollständig in die Tränkflüssigkeit eingetaucht ist. Dann wird ein Überdruck angelegt, beispielsweise von 15 Atmosphären, so daß die Tränkflüssigkeit schneller und tiefer in den porösen Körper eindringt, als es mit Atmosphärendruck möglich wäre. Der Überdruck wird mit Inertgas, insbesondere durch Stickstoff oder ein Edelgas aufgebaut, und über eine so lange Zeit aufrechterhalten, daß ein ausreichend tiefes Eindringen der Tränkflüssigkeit in den Stein gewährleistet ist. Wurde dem Tränkmedium zur Verbesserung der Eigenschaften des ausgehärteten Polymers Polymethylmethacrylat hinzugefügt kann es zur Verstopfung der Poren des porösen Körpers und somit zur unvollständigen Durchtränkung kommen. Um dies zu vermeiden ist es vorteilhaft, Vakuum-/Druckphasen wiederholt durchzuführen. Dadurch wird Polymethylmethacrylat, das sich auf den Poren abgesetzt hat, fortgespült. Die erforderliche Anzahl solcher Zyklen ist abhängig von der Porenhalsdurchmesserverteilung und dem Porenvolumen des zu imprägnierenden Gesteins. Anschließend wird die Tränkflüssigkeit abgelassen, der Überdruck im Behälter aber aufrechterhalten, um die vom Stein aufgenommene Tränkflüssigkeit nicht aus den Poren des Steins austreten zu lassen.

Anschließend wird die Temperatur des Gases im Behälter erhöht, um das Aushärten der Tränkflüssigkeit einzuleiten. Anstatt die Temperatur im Behälter zu erhöhen, kann auch eine Flüssigkeit, die unter Aufrechterhaltung des Überdrucks im Behälter in denselben eingelassen worden ist, soweit erwärmt werden, bis die Reaktion der Tränkflüssigkeit und damit deren Aushärtung eingeleitet ist. Während des Aushärtens muß der Überdruck aus demselben Grund wie zuvor geschildert aufrechterhalten werden. Nach dem Aushärten kann der Behälter vom Überdruck entlastet werden. Der auf diese Weise behandelte, poröse und brüchige Stein ist fest geworden und geschützt gegen Aggressivstoffe, insbesondere gegen Verwitterung.

Die folgenden Beispiele erläutern die Erfindung.

Ein trockener Baumberger Sandstein mit einer Masse von etwa 100 kg wurde in einen evakuierbaren Behälter eingebracht und 4 Wochen lang bei einem Druck von 60 kPa entgast. Anschließend wurde unter Aufrechterhaltung des Vakuums die Tränkflüssigkeit in den Behälter eingebracht, so daß der Sandstein vollständig in eine Tränkflüssigkeit der Zusammensetzung Acrylamid (91%), Ethyltriglycolmethacrylat (4%) , Tetramethylsilan (3 %) und Butylperoxid (2 %) eingetaucht war. Der Behälter wurde wechselweise viermal jeweils 12 Stunden lang unter einen Überdruck von 1500 kPa und anschließend unter ein Vakuum von 60 kPa bar gesetzt. Die überschüssige Tränkflüssigkeit wurde durch Überdruck aus dem Behälter entfernt und der Sandstein bei einem Druck von 1500 kPa und einer Temperatur von 80°C ausgehärtet. Der so erhaltene Sandstein wies eine hervorragende Witterungs- und Temperaturbeständigkeit auf.

Beispiele für weitere erfindungsgemäße Tränkflüssigkeiten sind:

| | |
|---|---|
| A) | 79% Acrylamid |
| | 9,5% Ethylhexylacrylat (EHA) |
| | 2,5% Ethyltriglycolmethacrylat (ETMA) |
| | 7,5% Tetraphenylsilan |
| | 1,5% Butylperoxid (BP) |
| B) | 89% Methacrylsäure |
| | 7% Ethylhexylacrylat (EHA) |
| | 3% Tetramethylsilan (TMS) |
| | 1% Butylperoxid (BP) |

Mit den Tränkflüssigkeiten A oder B nach dem oben genannten beispielhaften Verfahren behandelte Baumberger Sandsteine wiesen hervorragende Witterungs- und Temperaturbeständigkeiten auf.

## Patentansprüche

1. Tränkflüssigkeit zur Erhöhung der Festigkeit von porösen natürlichen und künstlichen Steinen und deren Widerstandsfähigkeit gegen Verwitterung, **dadurch gekennzeichnet, daß** die Tränkflüssigkeit
- 65 bis 95 Gew.% einer oder mehrerer polymerisierbarer Säuren oder Säurederivate, ausgewählt aus Methacrylsäure, deren Salze und Ester, Fumarsäure, deren Salze und Ester, Itaconsäure, deren Salze und Ester, Salzen und Estern der Acrylsäure, Acrylnitril, Acrylamid sowie deren Gemischen
- 1 bis 20 Gew.% eines Weichmachers
- 1 bis 10 Gew.% eines Organosilans enthält und das daraus erhaltene Harz oder Harzgemisch eine Glasübergangstemperatur von 70 bis 90°C aufweist.

2. Tränkflüssigkeit nach Anspruch 1, **dadurch gekennzeichnet, daß** die Tränkflüssigkeit zusätzlich Acrylsäure enthält.

3. Tränkflüssigkeit nach einem der vorherigen Ansprüche, **dadurch gekennzeichnet, daß** sie Ethyltriglykolmethacrylat und/oder 2-Ethylhexylacrylat enthält.

4. Tränkflüssigkeit nach einem der vorherigen Ansprüche, **dadurch gekennzeichnet, daß** das daraus erhaltene Harz oder Harzgemisch eine Glasübergangstemperatur von 78 bis 85°C aufweist.

5. Verfahren zur Erhöhung der Festigkeit eines porösen Körpers, **dadurch gekennzeichnet, daß** man den porösen Körper mit einer Tränkflüssigkeit nach einem der Ansprüche 1 bis 4 behandelt.

## Claims

1. An impregnating liquid for increasing the strength of porous natural and artificial stones and their weathering resistance, **characterized in that** such liquid contains
- between 65 and 95 % per cent by weight or one or several polymerizable acids or acid derivatives from the group comprising methacrylic acid, its salts and esters, fumaric acid, its salts and esters, itaconic acid, its salts and esters, salts and esters of acrylic acid, acrylonitrile, acrylamide as well as their mixtures,
- between 1 and 20 % by weight of a softener,
- between 1 and 10 % by weight of an organosilane, as well as
**in that** the resin or resin mixture obtained therefrom has a glass transition temperature between 70 and 90 °C.

2. The impregnating liquid in accordance with Claim 1, **characterized in that** the impregnating liquid additionally contains acrylic acid.

3. The impregnating liquid in accordance with one of the preceding Claims, **characterized in that** it contains ethyl triglycol methacrylate and/or 2-ethylhexyl acrylate.

4. The impregnating liquid in accordance with one of the preceding Claims, **characterized in that** the resin or resin mixture obtained therefrom has a glass transition temperature between 78 and 85 °C.

5. A process for increasing the strength of a porous article, **characterized in that** the porous article is treated by using an impregnating liquid in accordance with one of Claims 1 through 4.

## Revendications

1. Liquide d'imprégnation pour augmenter la résistance mécanique de pierres poreuses naturelles et synthétiques ainsi que leur résistance à la dégradation, **caractérisé en ce que** le liquide d'imprégnation contient
- 65% à 95% en poids d'un ou plusieurs acides ou dérivés d'acides polymérisables choisis parmi l'acide méthacrylique, ses sels et ses esters, l'acide fumarique, ses sels et ses esters, l'acide itaconique, ses sels et ses esters, les sels et les esters de l'acide acrylique, de l'acrylonitrile, de l'acrylamide ainsi que leurs mélanges;
- 1% à 20% d'un plastifiant; et
- 1% à 10% d'un organosilane; et
la résine ou le mélange de résines ainsi obtenu(e) présente une température de transition vitreuse de 70°C à 90°C.

2. Liquide d'imprégnation selon la revendication 1, **caractérisé en ce que** le liquide d'imprégnation contient en outre de l'acide acrylique.

3. Liquide d'imprégnation selon l'une quelconque des revendications précédentes, **caractérisé en ce qu'**il contient du méthacrylate d'éthyltriglycol et/ou de l'acrylate de 2-éthylhexyle.

4. Liquide d'imprégnation selon l'une quelconque des revendications précédentes, **caractérisé en ce que** la résine ou le mélange de résines ainsi. obtenu(e) présente une température de transition vitreuse de 78°C à 85°C.

5. Procédé pour augmenter la résistance mécanique d'un corps poreux, **caractérisé en ce que** l'on traite le corps poreux avec un liquide d'imprégnation selon l'une quelconque des revendications 1 à 4.
